# EUROPEAN PATENT SPECIFICATION

(11) **EP 1 691 523 B1**
(45) Date of publication and mention of the grant of the patent: **03.08.2011**
(21) Application number: 05112716.5
(22) Date of filing: 22.12.2005
(51) Int. Cl.: H04L 29/06

(54) **System and method for user access control to content in a network**
System und Methode zur Anwenderzugriffskontrolle zum Inhalt in einem Netz
Système et méthode pour le contrôle d'accès d'utilisateur au contenu dans un réseau

(30) Priority: 11.02.2005 US 56219
(43) Date of publication of application: 16.08.2006
(73) Proprietor: Samsung Electronics Ltd., Suwon-si, Gyeonggi-Do (KR)
(72) Inventor: Song, Yu, Milpitas, CA 95035 (US); Messer, Alan, Los Gatos, CA 95032 (US)
(74) Representative: Grootscholten, Johannes A.M.

(56) References cited:
- US-B1- 6 198 479
- US-B1- 6 728 884
- PATENT ABSTRACTS OF JAPAN vol. 2003, no. 12, 5 December 2003 (2003-12-05) & JP 2004 128532 A (FUJITSU LTD), 22 April 2004 (2004-04-22)

## Description

The present invention relates generally to user authentication for access to devices in a network, and more particularly, to user authentication on multiple, heterogeneous devices and appliances in a home network.

Several conventional approaches for user authentication to access devices in a network exist. The most popular approach is to use a centralized authentication server to store user authentication information, such as username/password, such that a user can log on with any client devices. The user authentication information provided by the user is transmitted to the authentication server for verification. Once authenticated, the user can access computing resources on different devices directly without further user verification on each individual device. A slightly modified approach for centralized server is to have an authentication server to access those resources on behalf of the client device.

However, a centralized authentication approach assumes that devices in a network have the same authentication method. In a networked enterprise environment, username/password can be assumed because every computer can accept username/password. However, that is not true for a home network where devices are heterogeneous in their authentication capabilities and methods.

Instead of a centralized authentication server, other conventional approaches store authentication information that is needed to access a client device on the client device itself. To access resources on a device, the user presents the device-specific user authentication information to the device and the device authenticates the user using device-specific methods. In such approaches, no centralized authentication server and unified user information exist. Compared to the centralized authentication server approach, authentication security is improved in that a compromise of authentication on one device does not affect the security on other devices. However, such approaches require a user to have access to the device that stores the authentication information for authentication purposes. The user cannot authenticate himself/herself on any given device.

Another conventional approach attempts to provide single sign-on (SSO) for multiple computing devices, each of which has its own user ID, with a map from device-specific ID to a system user ID such that once a user is logged onto a device, the same user can be automatically authenticated by the translation between the system user ID and device user ID. A modified version for such a decentralized SSO is called federated ID system, where there is no system-wide user ID. Each device contains a map that maps the device-specific user ID on that device to device-specific user IDs on other trusted devices. The list of trusted devices allows those users who are authenticated by the trusted device to be automatically authenticated on this device. However, these approaches assume that each device is capable of containing a user ID for a user. Further, the federated ID system is not flexible in that a device cannot authenticate a user if the device does not have authentication capability.

JP 2004 128532 discloses a system by which a home electric apparatus is allowed to authenticate a user by using an authentication means of another device.

The present invention addresses the above shortcomings.

The present invention provides an authentication system and method in a distributed system, such as a home network, that allows single sign-on (SSO) to authenticate a user over heterogeneous devices in the network. The present invention also allows a user to have a single sign-on (SSO) on multiple, heterogeneous devices and appliances in a home network within an application session and/or across multiple application sessions. The SSO system and method hide the different authentication methods that are device-specific from users and client applications, allowing SSO with different authentication methods on heterogeneous devices.

According to the present invention there is provided an apparatus and method as set forth in the appended claims. Preferred features of the invention will be apparent from the dependent claims, and the description which follows.

According to an aspect of the invention, there is provided a method for single sign-on (SSO) user authentication among multiple devices in a network of devices, one or more of the devices including a device-specific authentication control, comprising the steps of:
authenticating a user on a device having a device-specific authentication control based on a user-provided device-specific user ID;
characterised in that, once the user is authenticated on a specific device, translating the device-specific user ID into a network-wide user ID; and
translating the network-wide user ID into another device-specific user ID;
wherein that other device can authenticate that user based on the device-specific user ID for that other device.

In one version, the SSO system (and method) is implemented on a device or multiple devices in the home network. The SSO system employs a map that translates device-specific user IDs to system-wide user IDs and vice versa. A user is authenticated on a device with a device-specific authentication method. Once a user is authenticated on a specific device, a device-specific user ID is translated into a system-wide user ID. This system-wide user ID is further translated into other device-specific user IDs such that other devices can authenticate the user based on the device-specific user IDs. Further, if a device is not capable of authenticating a user, it can delegate authentication to another device or a proxy.

Compared to conventional approaches where authentication information is stored on a dedicated client device, the present invention does not require a user to have such a device that is for authentication purpose only. By contrast, the present invention allows a user to authenticate himself/herself on any given device. Once authenticated on one device, a user can be authenticated on any devices in a home environment when the user wishes to access resources on those devices. The present invention is advantageous over conventional approaches that use device-specific user ID, because such conventional approaches assume that each device is capable of containing a user ID for a user, whereas in the present invention, a device may not have capability to have user ID, but it can delegate other devices to authenticate on its behalf.

Further, compared to the conventional federated user ID system, the present invention is more flexible in that a device can authenticate a user if the device has the authentication capability; otherwise, it can delegate the authentication to another device to authenticate on its behalf. The delegate can be a device that has the authentication capability or a software proxy module that includes an authentication method. In addition, mapping user IDs among multiple devices are centralized. This is advantageous over the conventional federal ID system where a device contains a partial mapping between the device to other trusted devices, because it allows easy setup in a central place instead of requiring user to setup for each device.

For a better understanding of the invention, and to show how embodiments of the same may be carried into effect, reference will now be made, by way of example, to the accompanying diagrammatic drawings in which:
FIG. 1 shows an example functional block diagram of a network in which an embodiment of access control according to the present invention is implemented.
FIG. 2 shows an example functional block diagram of an authorization system according to an embodiment of the present invention.
FIG. 3 shows an example functional block diagram of an authorization system according to another embodiment of the present invention.
FIG. 4 shows an example functional block diagram of an authorization system according to another embodiment of the present invention.
FIG. 5 shows an example flowchart of example authorization steps implemented in the system of FIG. 2.
FIG. 6 shows an example flowchart of example authorization steps implemented in the system of FIG. 3.
FIG. 7 shows an example flowchart of example authorization steps implemented in the system of FIG. 4.

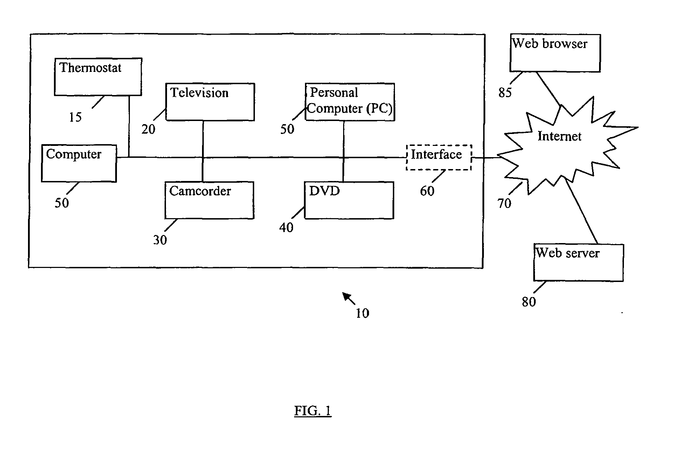

Referring to **FIG. 1****,** an example network such as a home network 10 includes multiple computing devices and appliances, such as TV 20, camcorder 30, DVD 40, conventional computing devices, such as PCs 50, which can be connected to the internet 70 via an optional interface 60 for communication with a web server 80 and a web browser 85. In the network 10, each computing device and appliance is heterogeneous in its computability and access methods. For example, a general purpose home personal computer 50 has enough computational power for authenticating a user while a thermostat is programmed to control the heating and cooling facility in the home and has little computation power. Usage of an application in the home network 10 usually utilizes multiple devices and appliances in the network 10. For example, playing a DVD movie includes connecting a DVD player to a TV, connecting TV to a home theater system, and browsing the DVD movie list to find a desired movie to play. To allow such usage, a authentication SSO system/method is provided in the network 10 such that a user is authenticated on each device before he/she is authorized to access resources on these devices. The SSO system does not burden the user with multiple sign-ons for each device he/she would like to use.

The SSO system and method according to an embodiment of the present invention allows a SSO in a session or across multiple sessions in an application. A session comprises a set of devices that is grouped together to provide certain services in an application. A user who uses the application needs to physically sign on with a device that he/she interacts with, and remotely sign on with other devices that the applications needs. For example, playing a DVD movie in a computer on a TV application requires a user to physically sign on with the TV, and subsequently sign on with the computer in order to play a DVD movie. The present invention automates the remote sign-on process for a user. In one example, this does not mean that the user can walk up to the computer during DVD playing session and use it without authentication. Such action is considered as the user wants to start another application on the computer, and requires another authentication.

The example SSO system (and method) is implemented on a device or multiple devices in the network 10. The SSO system employs a map that translates device-specific user IDs to system-wide user IDs and vice versa. A user is authenticated on a device with a device-specific authentication method. Once a user is authenticated on a specific device, a device-specific user ID is translated into a system-wide user ID. This system-wide user ID is further translated into other device-specific user IDs such that other devices can authenticate the user based on the device-specific user IDs. Further, if a device is not capable of authenticating a user, it can delegate authentication to another device or a proxy.

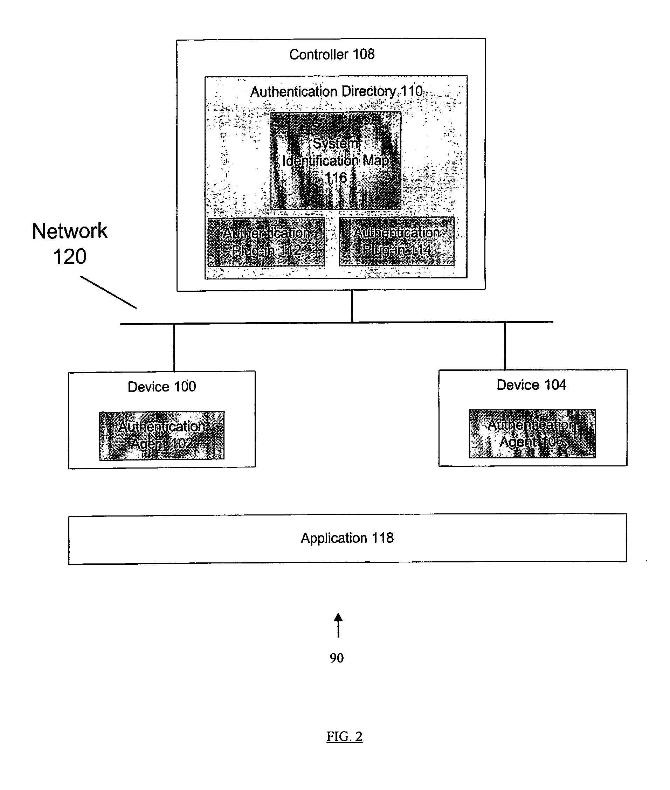

In one version, the SSO system is implemented among multiple devices, each of which may have its own authentication mechanism. For example, a computer allows a user to type username/password. A security door allows a user to swipe a badge. FIG. 2 shows a functional block diagram of an example SSO system 90 according to an embodiment of the present invention, comprising: a device 100 that has its own authentication agent 102; a second device 104 that has its own authentication agent 106; and a controller (software) module 108. The controller can run on a separate device or can run on device 100 or device 104. Devices 100, 104 and the device that hosts the controller are connected by the network 120.

The devices 100 and 104 can be any devices in the network 10, such as security-aware UPnP devices that contain device-specific authentication methods (e.g., device security ID). The controller software module 108 is implemented on a processing device such as an UPnP control point with security console (e.g., a PC 50 in network 10, FIG. 1). The controller 108 includes a system-wide user identification map 116 implemented in software, and an authentication directory 110 implemented in software, which includes multiple authentication plug-ins 112 and 114 also implemented in software, each of which corresponds to authentication agents 102 and 106, respectively. The system-wide user identification map 116, maps the device-specific user IDs from each device in the network 10 to a system-wide user ID. The authentication plug-in 112 can communicate with authentication agent 102 with a device-specific protocol. Likewise, the authentication plug-in 114 can communicate with the authentication agent 106 in a device-specific protocol. The authentication agent 102 includes a device-specific authentication method. For example, the authentication agent 102 uses username/password, and the authentication agent 106 uses personal badge. In this example, the controller 108 comprises a software module that as noted, can be hosted by a single computing device, such as a home computer 50 in FIG. 1, or can be distributed among multiple computing devices in the network 10. A distributed application 118 initiates on both device 100 and device 104, both of which require user authentication before the application can run. In this example, all devices are connected with different network technologies, such as Ethernet, wireless LAN (e.g., IEEE 802.11x), etc.

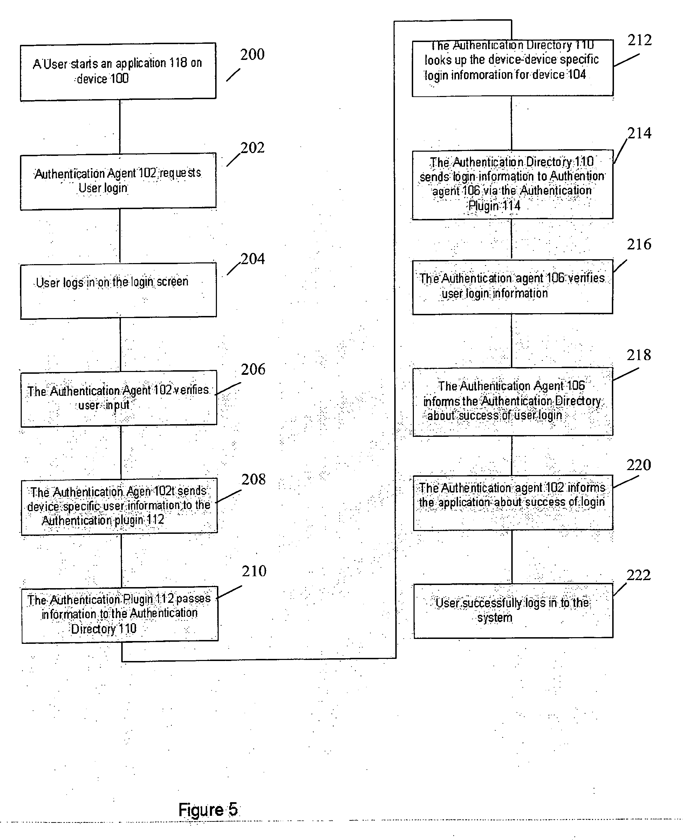

An example step-by-step operation of the SSO system 90 of **FIG. 2** is described below in conjunction with steps 200-222 shown in FIG. 5.
Step 200: A user starts the application 118 on the device 100.
Step 202: The authentication agent 102 in device 100 requests for the user's authentication information using the device-specific method.
Step 204: The user responds to the request and the response is received by the authentication agent 102.
Step 206: The authentication agent 102 verifies the user's input and confirms that the user is an authenticated user.
Step 208: The authentication agent 102 sends the device-specific user ID to the authentication plug-in 112.
Step 210: The authentication agent 102 passes the device-specific user ID to the authentication directory 110. The authentication directory 110 maps the device-specific user ID to a system user ID using the system ID map 116.
Step 212: The authentication directory 110 retrieves device-specific ID for device 104 from the system ID map 116 and sends it to the authentication plug-in 114.
Step 214: The authentication plug-in 114 sends the device-specific ID to authentication agent 106 in the device 104.
Step 216: The authentication agent 106 verifies and confirms the user ID.
Step 218: The authentication agent 106 informs the application 118 about the verification result.
Step 220: The authentication agent 102 informs the application 118 about the verification result.
Step 222: The authentication agent 102 sends "OK" to the authentication plug-in 114, wherein the authentication plug-in 114 passes "OK" to the authentication directory 110, and as a result, the user is so authenticated among multiple devices with SSO.

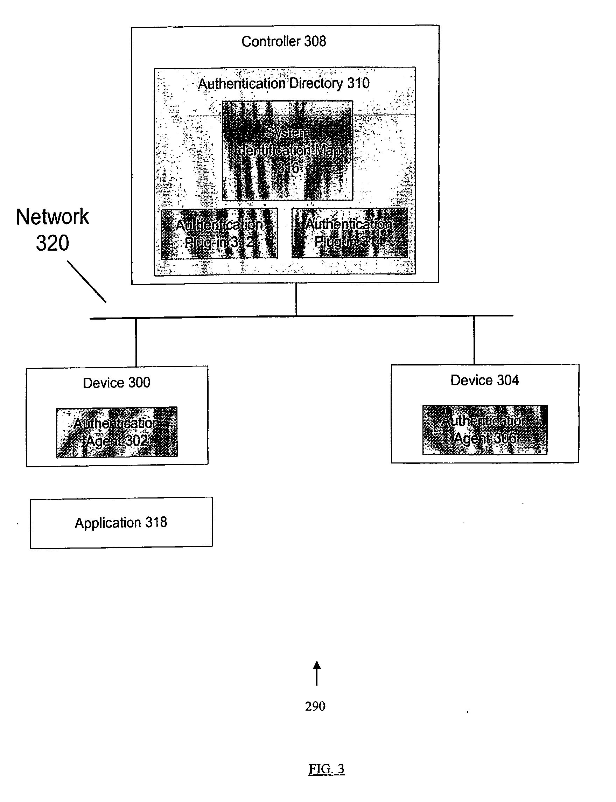

In a second embodiment, the present invention provides another SSO system (and method) implemented on multiple devices in the network 10 of FIG. 1, some of which devices may not have their own authentication mechanisms. For example, a thermostat may not have its own authentication mechanism. Instead, these devices rely on other devices to authenticate a user for them. **FIG. 3** shows an example functional block diagram of said SSO system 290 according to the second embodiment of the present invention, comprising: a device 300 that has its own authentication agent 302; a second device 304 that has its own authentication agent 306; a software controller module 308. The controller can run on a separate device or can run on device 300 or device 304. Devices 300, 304 and the device that hosts the controller are connected by the network 320.

The device 300 can be any device in the network 10 that does not have authentication method, such as an UPnP device that does not have UPnP security stack. The device 304, however, can be any device that can authenticate a user. For example, the device 304 can be an UPnP security-aware device that has a device security ID. Whenever a user wants to access services on the device 300, the authentication agent 302 directs the authentication process to authentication agent 306 on device 304. The controller 308 runs on a processing device in the network 10, such as an UPnP control point with security console (e.g., a PC 50 in network 10). The controller 308 includes an authentication directory 310 which includes a system-wide user identification map 316, and multiple authentication plug-ins 312 and 314, each of which corresponds to authentication agents 302 and 306, respectively. The system-wide user identification map 316 maps the device-specific user IDs from each device in the network 10 to a system-wide user ID. The authentication plug-in 312 can communicate with the authentication agent 302 in a device-specific communication protocol. Likewise, the authentication plug-in 314 can communicate with the authentication agent 306 with a device-specific communication protocol. The authentication agent 302 does not have its own authentication method. Instead, it delegates the device 304 to authenticate on its behalf. In this example, the controller 308 is implemented as a software module that, as noted, is hosted by a single computing device, such as a home computer 50, or can be distributed among multiple computing devices in the network 10. An application 318 runs on device 300 that requires user authentication before application can run. In this example, all devices are connected with different network technologies, such as Ethernet, wireless LAN (e.g., IEEE 802.11x), etc.

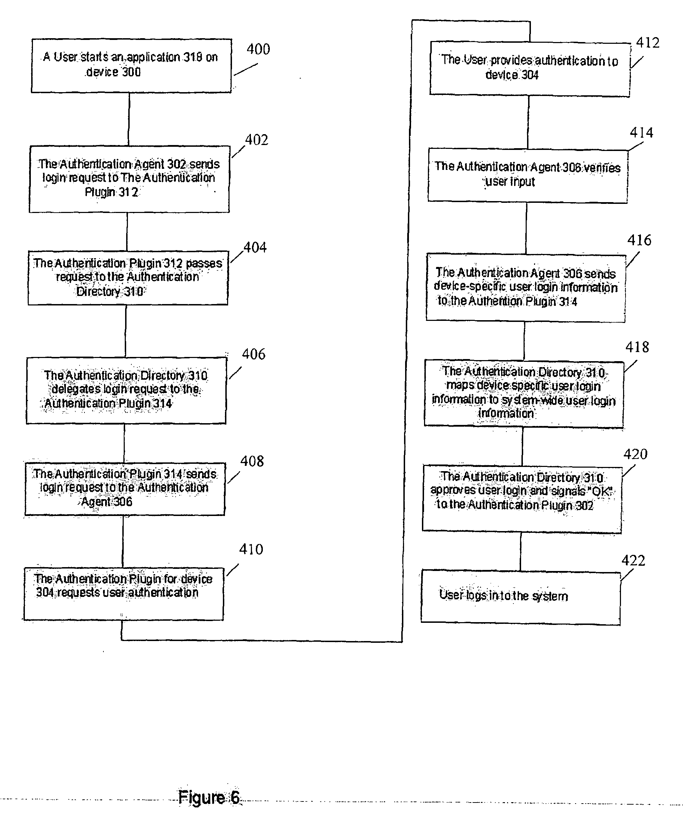

An example step-by-step operation of the SSO system 290 of **FIG. 3** is described below in conjunction with steps 400-422 shown in FIG. 6.
Step 400: A user starts application 318 on the device 300 (e.g., thermostat 15, FIG. 1).
Step 402: The authentication agent 302 does not have its own authentication method. It sends an authentication request to the authentication plug-in 312. The request includes a delegation message that device 300 asks the device 304 to authenticate on its behalf.
Step 404: The authentication plug-in 312 passes the request to the authentication directory 310.
Step 406: The authentication directory 310 extracts delegation information from the request and passes the request to the authentication plug-in 314.
Step 408: The authentication plug-in 314 sends the authentication request to the authentication agent 306 in the device 304.
Step 410: The authentication agent 306 asks the user for user authentication information, using device-specific method for device 304.
Step 412: The user inputs (provides) authentication information.
Step 414: The authentication agent 306 verifies and confirms user login information.
Step 416: The authentication agent 306 sends device-specific user ID to the authentication plug-in 314.
Step 418: The authentication agent 314 asks the authentication directory to map the device-specific ID to the system-wide ID.
Step 420: The authentication directory sends "OK" message to the authentication plug-in 312.
Step 422: The authentication plug-in 312 sends "OK" message back to the authentication agent 302, wherein the authentication agent 302 authenticates the user, and the user is so authenticated and is able to use the application on the device with SSO.

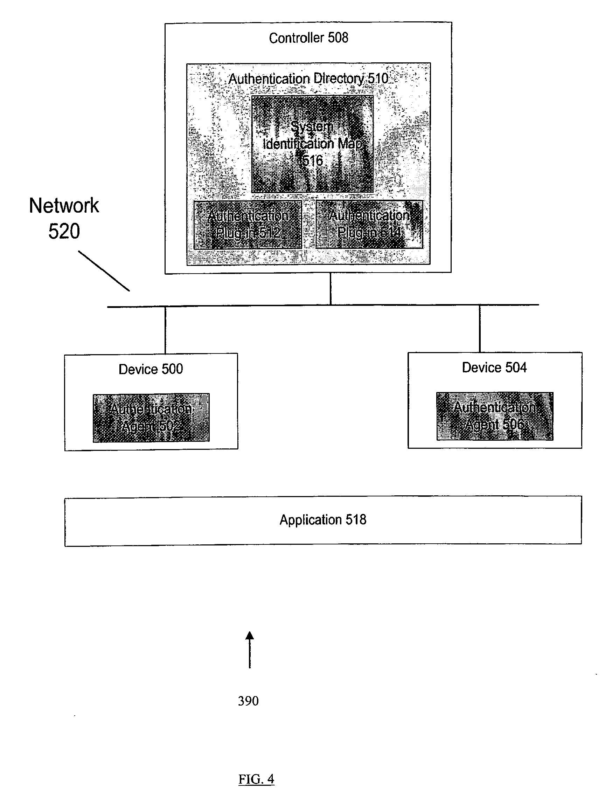

In a third embodiment, the present invention provides another SSO system (and method) implemented multiple devices in the network 10 of FIG. 1, some of which devices may not have their own authentication mechanisms. For example, a thermostat does not have its own authentication mechanism. Instead, these devices rely on their corresponding authentication plug-ins to authenticate users on their behalves. **FIG. 4** shows an example functional block diagram of said SSO system 490 according to the third embodiment of the present invention, comprising: a device 500 that has an authentication agent 502; a second device 504 that has an authentication agent 506; and a software controller module 508. The controller can run on a separate device or can run on device 500 or device 504. Devices 500, 504 and the device that hosts the controller are connected by the network 520.

The device 500 can be any device in the network 10 (FIG. 1) that does not have an authentication method. Instead, the device 500 relies on other devices in the network 10 to authenticate on its behalf. For example, an UPnP device that does not have UPnP security stack relies on a UPnP control point with security console to authenticate on its behalf. The device 504, however, can be a device with an authentication method, such as an UPnP security-aware device. The software controller 508 runs on a processing device, such as UPnP control point with security control (e.g., a PC 50 in FIG. 1). The software controller 508 includes an authentication directory 510 which includes a system-wide user identification map 516, and multiple authentication plug-ins 512 and 514, each of which corresponds to authentication agents 502 and 506, respectively. The system-wide user identification map 516 maps the device-specific user IDs from each device in the network 10 to a system-wide user ID. The authentication plug-ins 512 can communicate with the authentication agent 302 in a device-specific protocol. However, the authentication agent 502 is not able to authenticate users, instead, it relies on the authentication plug-in 512 to authenticate user on its behalf. The authentication plug-in 514 communicates with the authentication agent 506 with a device-specific communication protocol. The authentication agent 506 can authenticate user with a device-specific communication method. In this example, as noted, the controller 308 is implemented as a software module that can be hosted by a single computing device, such as a home computer 50 (FIG. 1), or it can be distributed among multiple computing devices in the network 10. An application 518 is a distributed application that runs on device 500 and 504, which requires user authentication before application can run. In this example, all devices are connected with different network technologies, such as Ethernet, wireless LAN (e.g., IEEE 802.11x), etc.

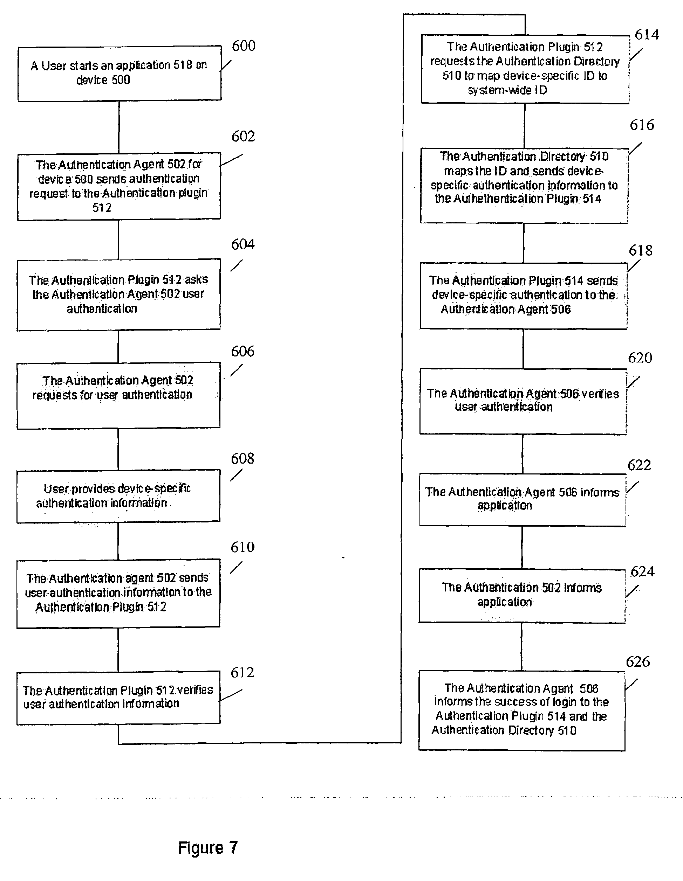

An example step-by-step description of the SSO system 390 of **FIG. 4** is described below in conjunction with steps 600-626 shown in FIG. 7.
Step 600: A user starts the application 518 on devices 500 and 504.
Step 602: The authentication agent 502 sends an authentication request to the authentication plug-in 512.
Step 604: The authentication plug-in 512 asks the authentication agent 502 for user authentication.
Step 606: The authentication agent 502 asks the user for authentication information.
Step 608: The user logs in on the device 500, providing the authentication information (i.e., device-specific user ID).
Step 610: The authentication agent 502 sends device-specific user authentication information to the authentication plug-in 512.
Step 612: The authentication plug-in 512 verifies and confirms the user authentication.
Step 614: The authentication plug-in 512 asks the authentication directory 510 to map device-specific user ID to a system ID from the system ID map 516.
Step 616: The authentication directory maps the system user ID to a device-specific user ID and sends to the authentication plug-in 514.
Step 618: The authentication plug-in 514 sends the device-specific user ID to the authentication agent 506.
Step 620: The authentication agent 506 verifies and confirms the user.
Step 622: The authentication agent 506 informs the application 518 that the user has been verified.
Step 624: The authentication agent 502 informs the application 518 that the user has been verified.
Step 626: The authentication agent 506 sends "OK" message to the authentication plug-in 514, the authentication plug-in 514 sends "OK" the authentication directory 510, and the user is so authenticated on both devices and is able to use the application with SSO.

As those skilled in the art will recognize, the present invention is not limited to the above example embodiments. In a first alternative embodiment of the present invention, the authentication directory is distributed over multiple controller software modules. Each software controller module runs on a separate apparatus. For example, there may be multiple UPnP control points with separate security consoles. Each UPnP control point includes a portion of the authentication directory. Each portion of authentication directory can be either disjoint or overlapped in its content. In the case of disjoint authentication directories, the distributed authentication directories form a complete virtual authentication directory. In this embodiment of the present invention, the distributed controllers coordinate and synchronize such multiple directories to ensure they are consistent for the user. In case of overlapped authentication directories, the distributed controllers coordinate among themselves such that the multiple authentication directories form a complete and consistent virtual authentication directory. If an entry in the virtual directory changes, all entries in distributed authentication directories that correspond to the entry are updated. As those skilled in the art will recognize, there are various mechanisms that can be used for consistency update. One example method can be that of master/slave approach where one copy of an overlapped authentication directory is designated as a master on which the update is always first performed; and other overlapped portions of distributed directory are designated as slaves to which the master propagates the updates.

In a second alternative embodiment of the present invention the SSO system includes multiple replications of the authentication directory. Each copy of the authentication directory is contained in a separate controller that runs on a separate apparatus. The replications coordinate among themselves to keep a consistent view on the authentication directory. As those skilled in the art will recognize, various mechanisms can be employed to keep consistency. One example method can be master/slave where a master copy of the authentication directory is always first updated, and any changes are subsequently propagated to slave copies.

Compared to conventional approaches where authentication information is stored on a dedicated client device, the present invention does not require a user to have such a device that is for authentication purpose only. By contrast, the present invention allows a user to authenticate himself/herself on any given device. Once authenticated on one device, a user can authenticated on any devices in a home environment when the user wishes to access resources on those devices. The present invention is advantageous over conventional approaches that use device-specific user ID, because such conventional approaches assume that each device is capable of containing a user ID for a user, whereas in the present invention, a device may not have capability to have user ID, but it can delegate other devices to authenticate on its behalf.

Further, compared to the conventional federated user ID system, the present invention is more flexible in that a device can authenticate a user if the device has the authentication capability; otherwise, it can delegate the authentication to another device to authenticate on its behalf. The delegate can be a device that has the authentication capability or a software proxy module that includes an authentication method. In addition, mapping user IDs among multiple devices are centralized. This is advantageous over the conventional federal ID system where a device contains a partial mapping between the device to other trusted devices, because it allows easy setup in a central place instead of requiring user to setup for each device.

While this invention is susceptible of embodiments in many different forms, there are shown in the drawings and will herein be described in detail, preferred embodiments of the invention with the understanding that the present disclosure is to be considered as an exemplification of the principles of the invention and is not intended to limit the broad aspects of the invention to the embodiments illustrated. The aforementioned example architectures above according to the present invention, can be implemented in many ways, such as program instructions for execution by a processor, as logic circuits, as ASIC, as firmware, etc., as is known to those skilled in the art. Therefore, the present invention is not limited to the example embodiments described herein.

Although a few preferred embodiments have been shown and described, it will be appreciated by those skilled in the art that various changes and modifications might be made without departing from the scope of the invention, as defined in the appended claims.

## Claims

1. A method for single sign-on, SSO, user authentication among multiple devices in a network of devices, one or more of the devices including a device-specific authentication control, comprising the steps of:
authenticating a user on a device having a device-specific authentication control based on a user provided device-specific user ID;
**characterised in that**, once the user is authenticated on said device, translating said device-specific user ID into a network-wide user ID; and
translating the network-wide user ID into another device-specific user ID;
wherein an other device can authenticate that user based on said another device-specific user ID.

2. The method of claim 1, further comprising the steps of utilizing a map for translating device-specific user IDs to network-wide user IDs and vice versa.

3. The method of claim 1 or claim 2, wherein the step of authenticating a user on a device having a device-specific authentication control further includes the steps of:
in a device having a device-specific authentication control, requesting device-specific user ID from the user; and
verifying the device-specific user ID using the device-specific authentication control in that device.

4. The method of claim 2 wherein the step of translating the device-specific user ID into a network-wide user ID further includes the steps of:
mapping the device-specific user ID to a network-wide user ID using a system ID map.

5. The method of claim 4 wherein the step of translating the network-wide user ID into other device-specific user IDs further includes the steps of retrieving a device-specific ID for another device from the system ID map.

6. The method of claim 5 further comprising the steps of authenticating the retrieved device-specific ID in the other device using the device-specific authentication control in that other device, wherein that other device authenticates the user based on the device-specific user ID.

7. The method of any preceding claim, further comprising the steps of, if a device is not capable of authenticating a user, then delegating authentication to another device for authenticating the user.

8. The method of claim 7, wherein the step of delegating authentication to another device for authenticating the user further includes the steps of delegating authentication to a device having a device-specific authentication control for authenticating the user.

9. The method of claim 8, further comprising the steps of:
the device having device-specific authentication control for authenticating the user, requesting device-specific user ID from the user; and
verifying the device-specific user ID using the device-specific authentication control in that device.

10. The method of any preceding claim further comprising the steps of providing SSO user authentication in a session or across multiple sessions in an application.

11. The method of any preceding claim further comprising the steps of:
providing said other device-specific user ID to said other device;
said other device using its device-specific authentication control to authenticate the user based on the provided device-specific user ID for that device.

12. A system for user authentication in a network of multiple devices, one or more of the devices including a device-specific authentication control, the system comprising:
an authentication agent (102) in a device that is operable to authenticate a user based on a user-provided device-specific user ID, using a device-specific authentication control for that device;
**characterised by** comprising a controller (108) that, once the user is authenticated, is operable to translate said device-specific user ID into a network-wide user ID, and to translate the network-wide user ID into another device-specific user ID;
wherein another device is operable to authenticate that user based on said another device-specific user ID, providing single sign-on, SSO, user authentication among multiple devices.

13. The system of claim 12, wherein the controller (108) is operable to utilize a map for translating device-specific user IDs to network-wide user IDs and vice versa.

14. The system of claim 12 or claim 13, wherein the authentication agent (102) is operable to authenticate the user by requesting device-specific user ID from the user, and verifying the device-specific user ID using a device-specific authentication control.

15. The system of claim 14 wherein the controller (108) is operable to translate the device-specific user ID into a network-wide user ID by mapping the device-specific user ID to a network-wide user ID using a system ID map.

16. The system of claim 15 wherein the controller (108) is operable to translate the network-wide user ID into other device-specific user IDs by retrieving a device-specific ID for another device from the system ID map.

17. The system of claim 12 wherein if a device is not capable of authenticating a user, the device is operable to delegate authentication to another device for authenticating the user.

18. The system of claim 17 wherein the delegating device is operable to delegate authentication to another device having a device-specific authentication control for authenticating the user.

19. The system of claim 18 wherein the device having device-specific authentication control for authenticating the user, is operable to request device-specific user ID from the user and verifies the device-specific user ID using the device-specific authentication control in that device.

20. The system of claim 12 wherein the controller (108) is operable to provide said other device-specific user ID to said other device and said other device is operable to use its device-specific authentication control to authenticate the user based on the provided device-specific user ID for that device, providing single sign-on, SSO, user authentication among multiple devices.

21. A network comprising:
multiple devices, one or more of the devices including a device-specific authentication control; and
a system for user authentication as claimed in any one of claims 12 to 20.

## Patentansprüche

1. Verfahren zur Single-Sign-on-, SSO-, Benutzerauthentifizierung unter mehreren Vorrichtungen in einem Netzwerk aus Vorrichtungen, wobei eine oder mehrere der Vorrichtungen eine vorrichtungsspezifische Authentifizierungskontrolle beinhalten, umfassend die Schritte:
Authentifizieren eines Benutzers auf einer Vorrichtung mit einer vorrichtungsspezifischen Authentifizierungskontrolle auf Grundlage einer vom Benutzer bereitgestellten vorrichtungsspezifischen Benutzer-ID;
**gekennzeichnet durch**, sobald der Benutzer auf der Vorrichtung authentifiziert ist, Übersetzen der vorrichtungsspezifischen Benutzer-ID zu einer netzwerkweiten Benutzer-ID; und
Übersetzen der netzwerkweiten Benutzer-ID zu einer anderen vorrichtungsspezifischen Benutzer-ID;
wobei eine andere Vorrichtung diesen Benutzer auf Grundlage der anderen vorrichtungsspezifischen Benutzer-ID authentifizieren kann.

2. Verfahren nach Anspruch 1, weiterhin umfassend den Schritt des Verwendens einer Abbildung zum Übersetzen vorrichtungsspezifischer Benutzer-IDs zu netzwerkweiten Benutzer-IDs und vice versa.

3. Verfahren nach Anspruch 1 oder Anspruch 2, wobei der Schritt des Authentifizierens eines Benutzers auf einer Vorrichtung mit einer vorrichtungsspezifischen Authentifizierungskontrolle weiterhin die Schritte beinhaltet:
in einer Vorrichtung mit einer vorrichtungsspezifischen Authentifizierungskontrolle, Verlangen einer vorrichtungsspezifischen Benutzer-ID vom Benutzer; und
Verifizieren der vorrichtungsspezifischen Benutzer-ID mittels der vorrichtungsspezifischen Authentifizierungskontrolle in dieser Vorrichtung.

4. Verfahren nach Anspruch 2, wobei der Schritt des Übersetzens der vorrichtungsspezifischen Benutzer-ID zu einer netzwerkweiten Benutzer-ID weiterhin den Schritt beinhaltet:
Abbilden der vorrichtungsspezifischen Benutzer-ID auf eine netzwerkweite Benutzer-ID mittels einer System-ID-Abbildung.

5. Verfahren nach Anspruch 4, wobei der Schritt des Übersetzens der netzwerkweiten Benutzer-ID zu anderen vorrichtungsspezifischen Benutzer-IDs weiterhin den Schritt des Abrufens einer vorrichtungsspezifischen ID für eine andere Vorrichtung aus der System-ID-Abbildung beinhaltet.

6. Verfahren nach Anspruch 5, weiterhin umfassend den Schritte des Authentifizierens der abgerufenen vorrichtungsspezifischen ID in der anderen Vorrichtung mittels der vorrichtungsspezifischen Authentifizierungskontrolle in dieser anderen Vorrichtung, wobei diese andere Vorrichtung den Benutzer auf Grundlage der vorrichtungsspezifischen Benutzer-ID authentifiziert.

7. Verfahren nach einem der vorstehenden Ansprüche, weiterhin umfassend, falls eine Vorrichtung nicht zum Authentifizieren eines Benutzers in der Lage ist, den Schritt des Delegierens von Authentifizierung an eine andere Vorrichtung zum Authentifizieren des Benutzers.

8. Verfahren nach Anspruch 7, wobei der Schritt des Delegierens von Authentifizierung an eine andere Vorrichtung zum Authentifizieren des Benutzers weiterhin den Schritt des Delegierens von Authentifizierung an eine Vorrichtung mit einer vorrichtungsspezifischen Authentifizierungskontrolle zum Authentifizieren des Benutzers beinhaltet.

9. Verfahren nach Anspruch 8, weiterhin umfassend die Schritte:
in die Vorrichtung mit vorrichtungsspezifischer Authentifizierungskontrolle zum Authentifizieren des Benutzers, Verlangen einer vorrichtungsspezifischen Benutzer-ID vom Benutzer;
Verifizieren der vorrichtungsspezifischen Benutzer-ID mittels der vorrichtungsspezifischen Authentifizierungskontrolle in dieser Vorrichtung.

10. Verfahren nach einem der vorstehenden Ansprüche, weiterhin umfassend den Schritt des Bereitstellens von SSO-Benutzerauthentifizierung in einer Sitzung oder über mehrere Sitzungen in einer Anwendung.

11. Verfahren nach einem der vorstehenden Ansprüche, weiterhin umfassend die Schritte:
Bereitstellen der anderen vorrichtungsspezifischen Benutzer-ID für die andere Vorrichtung,
wobei die andere Vorrichtung ihre vorrichtungsspezifische Authentifizierungskontrolle verwendet, um den Benutzer auf Grundlage der bereitgestellten vorrichtungsspezifischen Benutzer-ID für diese Vorrichtung zu authentifizieren.

12. System zur Benutzerauthentifizierung in einem Netzwerk aus mehreren Vorrichtungen, wobei eine oder mehrere der Vorrichtungen eine vorrichtungsspezifische Authentifizierungskontrolle beinhalten, das System umfassend:
einen Authentifizierungsagenten (102) in einer Vorrichtung, der betreibbar ist, um einen Benutzer auf Grundlage einer vom Benutzer bereitgestellten vorrichtungsspezifischen Benutzer-ID zu authentifizieren, mittels einer vorrichtungsspezifischen Authentifizierungskontrolle für diese Vorrichtung;
**gekennzeichnet durch** Umfassen eines Controllers (108), der, sobald der Benutzer authentifiziert ist, betreibbar ist, um die vorrichtungsspezifische Benutzer-ID zu einer netzwerkweiten Benutzer-ID zu übersetzen, und um die netzwerkweite Benutzer-ID zu einer anderen vorrichtungsspezifischen Benutzer-ID zu übersetzen;
wobei eine andere Vorrichtung betreibbar ist, um diesen Benutzer auf Grundlage der anderen vorrichtungsspezifischen Benutzer-ID zu authentifizieren, wobei Single-Sign-on-, SSO-, Benutzerauthentifizierung unter mehreren Vorrichtungen bereitgestellt wird.

13. System nach Anspruch 12, wobei der Controller (108) betreibbar ist, um eine Abbildung zum Übersetzen vorrichtungsspezifischer Benutzer-IDs zu netzwerkweiten Benutzer-IDs und vice versa zu verwenden.

14. System nach Anspruch 12 oder Anspruch 13, wobei der Authentifizierungsagent (102) betreibbar ist, um den Benutzer zu authentifizieren durch Verlangen einer vorrichtungsspezifischen Benutzer-ID vom Benutzer, und durch Verifizieren der vorrichtungsspezifischen Benutzer-ID mittels einer vorrichtungsspezifischen Authentifizierungskontrolle.

15. System nach Anspruch 14, wobei der Controller (108) betreibbar ist, um die vorrichtungsspezifische Benutzer-ID zu einer netzwerkweiten Benutzer-ID zu übersetzen durch Abbilden der vorrichtungsspezifischen Benutzer-ID auf eine netzwerkweite Benutzer-ID mittels einer System-ID-Abbildung.

16. System nach Anspruch 15, wobei der Controller (108) betreibbar ist, um die netzwerkweite Benutzer-ID zu anderen vorrichtungsspezifischen Benutzer-IDs zu übersetzen durch Abrufen einer vorrichtungsspezifischen ID für eine andere Vorrichtung aus der System-ID-Abbildung.

17. System nach Anspruch 12, wobei, falls eine Vorrichtung nicht zum Authentifizieren eines Benutzers in der Lage ist, die Vorrichtung betreibbar ist, um Authentifizierung an eine andere Vorrichtung zum Authentifizieren des Benutzers zu delegieren.

18. System nach Anspruch 17, wobei die delegierende Vorrichtung betreibbar ist, um Authentifizierung an eine andere Vorrichtung mit einer vorrichtungsspezifischen Authentifizierungskontrolle zum Authentifizieren des Benutzers zu delegieren.

19. System nach Anspruch 18, wobei die Vorrichtung, mit vorrichtungsspezifischer Authentifizierungskontrolle zum Authentifizieren des Benutzers, betreibbar ist, um eine vorrichtungsspezifische Benutzer-ID vom Benutzer zu verlangen, und um die vorrichtungsspezifische Benutzer-ID mittels der vorrichtungsspezifischen Authentifizierungskontrolle in dieser Vorrichtung zu verifizieren.

20. System nach Anspruch 12, wobei der Controller (108) betreibbar ist, um der anderen Vorrichtung die andere vorrichtungsspezifische Benutzer-ID bereitzustellen, und die andere Vorrichtung betreibbar ist, um ihre vorrichtungsspezifische Authentifizierungskontrolle zu verwenden, um den Benutzer auf Grundlage der bereitgestellten vorrichtungsspezifischen Benutzer-ID für diese Vorrichtung zu authentifizieren, wobei Single-Sign-on-, SSO-, Benutzerauthentifizierung unter mehreren Vorrichtungen bereitgestellt wird.

21. Netzwerk, umfassend:
mehrere Vorrichtungen, wobei eine oder mehrere der Vorrichtungen eine vorrichtungsspezifische Authentifizierungskontrolle beinhalten; und
ein System für Benutzerauthentifizierung nach einem der Ansprüche 12 bis 20.

## Revendications

1. Procédé d'authentification d'utilisateur par signature unique (single sign-on, SSO) parmi de multiples dispositifs dans un réseau de dispositifs, l'un au moins des dispositifs bénéficiant d'un contrôle d'authentification spécifique au dispositif, comprenant les étapes consistant à :
authentifier un utilisateur sur un dispositif bénéficiant d'un contrôle d'authentification spécifique au dispositif en se fondant sur un nom d'utilisateur spécifique au dispositif fourni par l'utilisateur ;
**caractérisé en ce que**, une fois que l'utilisateur a été authentifié sur ledit dispositif, on traduit ledit nom d'utilisateur spécifique au dispositif en un nom d'utilisateur à l'échelle du réseau ; et
on traduit le nom d'utilisateur à l'échelle du réseau en un autre nom d'utilisateur spécifique au dispositif ;
un autre dispositif pouvant authentifier cet utilisateur en se fondant sur ledit un autre nom d'utilisateur spécifique au dispositif.

2. Procédé selon la revendication 1, comprenant en outre l'étape consistant à mettre en oeuvre une mappe pour traduire les noms d'utilisateur spécifiques au dispositif en des noms d'utilisateur à l'échelle du réseau et vice versa.

3. Procédé selon la revendication 1 ou la revendication 2, dans lequel l'étape d'authentification d'un utilisateur sur un dispositif bénéficiant d'un contrôle d'authentification spécifique au dispositif comporte en outre les étapes consistant à :
dans un dispositif bénéficiant d'un contrôle d'authentification spécifique au dispositif, requérir auprès de l'utilisateur le nom d'utilisateur spécifique au dispositif ; et
vérifier le nom d'utilisateur spécifique au dispositif en utilisant le contrôle d'authentification spécifique au dispositif dans ce même dispositif.

4. Procédé selon la revendication 2, dans lequel l'étape de traduction du nom d'utilisateur spécifique au dispositif en un nom d'utilisateur à l'échelle du réseau comporte en outre l'étape consistant à :
mapper le nom d'utilisateur spécifique au dispositif sur un nom d'utilisateur à l'échelle du réseau en utilisant une mappe de nom d'utilisateur système.

5. Procédé selon la revendication 4, dans lequel l'étape de traduction du nom d'utilisateur à l'échelle du réseau en d'autres noms d'utilisateur spécifiques au dispositif comporte en outre l'étape consistant à récupérer un nom d'utilisateur spécifique au dispositif pour un autre dispositif à partir de la mappe de nom d'utilisateur système.

6. Procédé selon la revendication 5, comprenant en outre l'étape consistant à authentifier dans l'autre dispositif le nom d'utilisateur spécifique au dispositif récupéré en utilisant le contrôle d'authentification spécifique au dispositif dans cet autre dispositif, cet autre dispositif authentifiant l'utilisateur en se fondant sur le nom d'utilisateur spécifique au dispositif.

7. Procédé selon l'une quelconque des revendications précédentes, comprenant en outre l'étape consistant, si un dispositif n'est pas en mesure d'identifier un utilisateur, à déléguer l'authentification à un autre dispositif pour identifier l'utilisateur.

8. Procédé selon la revendication 7, dans lequel l'étape de délégation de l'authentification à un autre dispositif pour identifier l'utilisateur comporte en outre l'étape consistant à déléguer l'authentification à un dispositif bénéficiant d'un contrôle d'authentification spécifique au dispositif pour identifier l'utilisateur.

9. Procédé selon la revendication 8, comprenant en outre les étapes consistant à :
dans le dispositif ayant un contrôle d'authentification spécifique au dispositif pour identifier l'utilisateur, requérir auprès de l'utilisateur le nom d'utilisateur spécifique au dispositif ; et
vérifier le nom d'utilisateur spécifique au dispositif en utilisant le contrôle d'authentification spécifique au dispositif dans ce dispositif.

10. Procédé selon l'une quelconque des revendications précédentes comprenant en outre l'étape consistant à fournir une authentification SSO de l'utilisateur dans une session ou sur de multiples sessions dans une application.

11. Procédé selon l'une quelconque des revendications précédentes comprenant en outre les étapes consistant à :
fournir ledit autre nom d'utilisateur spécifique au dispositif audit autre dispositif ;
ledit autre dispositif employant son contrôle d'authentification spécifique au dispositif pour authentifier l'utilisateur en se fondant sur le nom d'utilisateur spécifique au dispositif fourni pour ce dispositif.

12. Système d'authentification de l'utilisateur dans un réseau de multiples dispositifs, l'un au moins des dispositifs comportant un contrôle d'authentification spécifique au dispositif, le système comprenant :
un agent d'authentification (102) dans un dispositif qui est susceptible d'authentifier un utilisateur en se fondant sur un nom d'utilisateur spécifique au dispositif fourni par l'utilisateur, en employant un contrôle d'authentification spécifique au dispositif pour ce dispositif ;
**caractérisé par le fait qu'**il comprend un contrôleur (108) qui, une fois que l'utilisateur a été authentifié, est susceptible de traduire ledit nom d'utilisateur spécifique au dispositif en un nom d'utilisateur à l'échelle du réseau, et de traduire le nom d'utilisateur à l'échelle du réseau en un autre nom d'utilisateur spécifique au dispositif ;
un autre dispositif étant susceptible d'authentifier cet utilisateur en se fondant sur ledit un autre nom d'utilisateur spécifique au dispositif, en fournissant une authentification d'utilisateur par signature unique (single sign-on, SSO) parmi de multiples dispositifs.

13. Système selon la revendication 12, dans lequel le contrôleur (108) est susceptible de mettre en oeuvre une mappe pour traduire les noms d'utilisateur spécifiques au dispositif en des noms d'utilisateur à l'échelle du réseau et vice versa.

14. Système selon la revendication 12 ou la revendication 13, dans lequel l'agent d'authentification (102) est susceptible d'authentifier l'utilisateur en requérant auprès de l'utilisateur un nom d'utilisateur spécifique au dispositif, et en vérifiant le nom d'utilisateur spécifique au dispositif en utilisant un contrôle d'authentification spécifique au dispositif.

15. Système selon la revendication 14, dans lequel le contrôleur (108) est susceptible de traduire le nom d'utilisateur spécifique au dispositif en un nom d'utilisateur à l'échelle du réseau en mappant le nom d'utilisateur spécifique au dispositif sur un nom d'utilisateur à l'échelle du réseau en utilisant une mappe de nom d'utilisateur système.

16. Système selon la revendication 15, dans lequel le contrôleur (108) est susceptible de traduire le nom d'utilisateur à l'échelle du réseau en d'autres noms d'utilisateur spécifiques au dispositif en récupérant un nom d'utilisateur spécifique au dispositif pour un autre dispositif à partir de la mappe de nom d'utilisateur système.

17. Système selon la revendication 12, dans lequel, si un dispositif n'est pas en mesure d'identifier un utilisateur, le dispositif est susceptible de déléguer l'authentification à un autre dispositif pour identifier l'utilisateur.

18. Système selon la revendication 17, dans lequel le dispositif effectuant la délégation est susceptible de déléguer l'authentification à un autre dispositif bénéficiant d'un contrôle d'authentification spécifique au dispositif pour identifier l'utilisateur.

19. Système selon la revendication 18, dans lequel le dispositif ayant un contrôle d'authentification spécifique au dispositif pour identifier l'utilisateur est susceptible de requérir auprès de l'utilisateur le nom d'utilisateur spécifique au dispositif et vérifie le nom d'utilisateur spécifique au dispositif en utilisant le contrôle d'authentification spécifique au dispositif dans ce dispositif.

20. Système selon la revendication 12, dans lequel le contrôleur (108) est susceptible de fournir ledit autre nom d'utilisateur spécifique au dispositif audit autre dispositif et ledit autre dispositif est susceptible d'employer son contrôle d'authentification spécifique au dispositif pour authentifier l'utilisateur en se fondant sur le nom d'utilisateur spécifique au dispositif fourni pour ce dispositif, en fournissant une authentification d'utilisateur par signature unique (single sign-on, SSO) parmi de multiples dispositifs.

21. Réseau comprenant :
de multiples dispositifs, l'un au moins des dispositifs comportant un contrôle d'authentification spécifique au dispositif ; et
un système d'authentification de l'utilisateur selon l'une quelconque des revendications 12 à 20.
